(19) Europäisches Patentamt
European Patent Office
Office européen des brevets

(11) **EP 4 075 352 A1**

(12) **EUROPEAN PATENT APPLICATION**

(43) Date of publication:
**19.10.2022 Bulletin 2022/42**

(21) Application number: **21196757.5**

(22) Date of filing: **15.09.2021**

(51) International Patent Classification (IPC):
**G06Q 10/04** (2012.01)   **G06Q 10/06** (2012.01)
**G06Q 10/10** (2012.01)   **G06Q 50/18** (2012.01)

(52) Cooperative Patent Classification (CPC):
**G06Q 10/06; G06Q 10/04; G06Q 10/10;
G06Q 50/184**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2021 IN 202121017730**

(71) Applicant: **Tata Consultancy Services Limited
Maharashtra (IN)**

(72) Inventors:
• **INDRA, Parthapratim
700091 Kolkata, West Bengal (IN)**
• **GUHA, Shekhar
700091 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

Remarks:
Amended claims in accordance with Rule 137(2)
EPC.

(54) **METHOD AND SYSTEM FOR PROVIDING INTELLECTUAL PROPERTY ADOPTION
RECOMMENDATIONS TO AN ENTERPRISE**

(57)    An enterprise needs to accomplish IP adoption in a progressive and result oriented manner commensurate to its IP-led objectives. A method and system for providing intellectual property adoption recommendations to an enterprise have been provided. The disclosure also provides dynamic guidance and recommendation towards course correction to arrive at target state of IP led business. In order to capture the various aspects of enterprises' IP adoption, lifecycle phases of IP in an enterprise are considered as capability dimensions of a maturity model. To effectively measure the capability attributes' maturity levels in relation to defined goals, a set of IP metrics are determined for each capability maturity level. The IP adoption maturity levels are assessed and roll up to a 5-point IP adoption index that is an indicator of IP adoption maturity of the enterprise and enables it to set its IP goals and to build an IP adoption roadmap.

FIG. 4

EP 4 075 352 A1

## Description

CROSS-REFERENCE TO RELATED APPLICATIONS AND PRIORITY

The present application claims priority from Indian provisional patent application no. 202121017730, filed on April 16, 2021.

TECHNICAL FIELD

The disclosure herein generally relates to the field of intellectual property (IP) led business of an organization, and, more particularly, to a system and method for providing dynamic IP adoption recommendations appropriate to the organization's IP led business by way of actionable and measurable IP adoption mechanism.

BACKGROUND

Human race has reached a turning point towards digital revolution after agricultural revolution, industrial revolution and internet revolution era. Accordingly, enterprises constantly explore, experiment and innovate across their ecosystem. This would generate vast Intellectual Properties (IPs). To manage such boundless IPs, maturity of IP management of an enterprise too must be adaptable and actionable commensurate with the evolving change momentum generated across IP lifecycle phases.

In the era of Industry 4.0 driven by digitalization and disruptive innovations, the objective to manage an IP program for an enterprise is to enable the acceleration of 'technology and insight led' business disruptions. To keep pace with the Industry 4.0 paradigm, IP strategies need to be reimagined, and IP managers need to adopt methods and processes commensurate with the contemporary demands of technological and industrial change. To this effect, an IP management framework has been developed to support and facilitate the management of intellectual property in enterprises that are embracing Industry 4.0. This framework is termed as 'IP 4.0', it has been developed to enable enterprises to create, protect and exploit intellectual property amid the abundant and boundary less innovation opportunities that have emerged in the Industry 4.0 paradigm.

The objective of IP 4.0 is to support and facilitate the management of intellectual property in the present dynamic socio-economic environment and accelerate technology-led business disruptions, thereby enabling enterprises to enhance growth-momentum through appropriate IP-led business by adopting new paradigms. To accomplish this, a set of guiding principles are defined for an enterprise to establish effective and efficient IP management.

The IP strategy of a large organization needs to maintain a fine balance. It should enhance the environment for serendipitous discovery and at the same time, create intellectual property that aligns with the organization's business goals. The bigger and more diverse a company is, the greater the challenge. Ensuring process rigor is also important in creating high quality IP that generates value and reduces risk.

It is necessary to mature enterprises' IP management. In addition to that it is also necessary to quantify the progress of the organization in terms of IP adoption of the organization. Furthermore, to keep pace with the change momentum across IP lifecycle phases, enterprises are required to periodically assess their IP adoption and in turn effectiveness of their IP management.

SUMMARY

Embodiments of the present disclosure present technological improvements as solutions to one or more of the above-mentioned technical problems recognized by the inventors in conventional systems. For example, in one embodiment, a method for realizing intellectual property (IP) in an organization is provided. The system comprises an input/output interface, one or more hardware processors and memory. The input/output interface for providing market context data, industry trend data, and IP led business aspirations of the organization as a first set of inputs. The memory in communication with the one or more hardware processors, wherein the one or more first hardware processors are configured to execute programmed instructions stored in the one or more first memories, to: identify from the first set of inputs a plurality of key stakeholders and a plurality of capability dimensions; assign weightages to the plurality of capability dimensions based on their importance and criticality as per IP strategy of the organization; collate relevant information about existing IP management practices in the organization from an existing IP capability landscape of the organization; provide a plurality of trajectory indicators to get an impression of the progress as per IP led business aspirations; derive an IP adoption maturity metrics using the plurality of trajectory indicators, the weightages and the existing IP management practices for each of the plurality of capability dimensions, by applying a plurality of assessment techniques; determine a current IP adoption index using the prepared current IP adoption maturity metrics, wherein the current IP adoption index provides a current state of IP adoption in the organization; compare the current IP adoption index of the organization with a target IP adoption index to derive a set of capability gap areas; provide recommendations by defining the metrics, towards addressing the derived set of capability gap areas; define a roadmap using the recommendations in alignment with the IP strategy of the organization towards developing a medium and long term IP adoption roadmap; provide a set of means to manage defined roadmap realization within a stipulated time-frame and budget.

In another aspect, a method for realizing intellectual property (IP) in an organization is provided. Initially, market context data, industry trend data, and IP led business aspirations of the organization are provided as a first set of inputs. Further, from the first set of inputs a plurality of key stakeholders and a plurality of capability dimensions are identified. In the next step weightages are assigned to the plurality of capability dimensions based on their importance and criticality as per IP strategy of the organization. Relevant information is then collated about existing IP management practices in the organization from an existing IP capability landscape of the organization. Further, a plurality of trajectory indicators are provided to get an impression of the progress as per IP led business aspirations. In the next step, an IP adoption maturity metrics is derived using the plurality of trajectory indicators, the weightages and the existing IP management practices for each of the plurality of capability dimensions, by applying a plurality of assessment techniques. In the next step, a current IP adoption index is determined using the prepared current IP adoption maturity metrics, wherein the current IP adoption index provides a current state of IP adoption in the organization. Further, the current IP adoption index of the organization is compared with a target IP adoption index to derive a set of capability gap areas. The recommendations are then provided by defining the metrics, towards addressing the derived set of capability gap areas. A roadmap is defined using the recommendations in alignment with the IP strategy of the organization towards developing a medium and long term IP adoption roadmap. And finally, a set of means is provided to manage defined roadmap realization within a stipulated time-frame and budget.

In yet another aspect, one or more non-transitory machine-readable information storage mediums comprising one or more instructions which when executed by one or more hardware processors cause realizing intellectual property (IP) in an organization is provided. Initially, market context data, industry trend data, and IP led business aspirations of the organization are provided as a first set of inputs. Further, from the first set of inputs a plurality of key stakeholders and a plurality of capability dimensions are identified. In the next step weightages are assigned to the plurality of capability dimensions based on their importance and criticality as per IP strategy of the organization. Relevant information is then collated about existing IP management practices in the organization from an existing IP capability landscape of the organization. Further, a plurality of trajectory indicators are provided to get an impression of the progress as per IP led business aspirations. In the next step, an IP adoption maturity metrics is derived using the plurality of trajectory indicators, the weightages and the existing IP management practices for each of the plurality of capability dimensions, by applying a plurality of assessment techniques. In the next step, a current IP adoption index is determined using the prepared current IP adoption maturity metrics, wherein the current IP adoption index provides a current state of IP adoption in the organization. Further, the current IP adoption index of the organization is compared with a target IP adoption index to derive a set of capability gap areas. The recommendations are then provided by defining the metrics, towards addressing the derived set of capability gap areas. A roadmap is defined using the recommendations in alignment with the IP strategy of the organization towards developing a medium and long term IP adoption roadmap. And finally, a set of means is provided to manage defined roadmap realization within a stipulated time-frame and budget.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of an exemplary system for providing intellectual property adoption recommendations to an enterprise according to some embodiments of the present disclosure.
FIG. 2 is a flowchart illustrating a method for providing intellectual property adoption recommendations to an enterprise according to some embodiments of the present disclosure.
FIG. 3 shows schematic representation of an IP adoption maturity assessment metrics formulation according to an embodiment of the present disclosure.
FIG. 4 shows a schematic representation of an IP adoption maturity model according to an embodiment of the present disclosure.
FIG. 5 illustrates an example representation of point-in-time IP adoption state of an enterprise in accordance with some embodiments of the present disclosure.
FIG. 6(A) and 6(B) illustrates an example of IP adoption indices according to some embodiments of the present disclosure.
FIG. 7 illustrates the IP adoption maturity model showing harnessing & managing IP capabilities according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

An enterprise needs to accomplish IP adoption in a progressive and result oriented manner commensurate to its IP-led business objectives. This IP adoption should be pragmatic and assessable through definite set of metrics that are at the enterprise level as well at various capability levels. A definitive, actionable IP roadmap would result as an outcome of this IP adoption.

There exist a few prior arts which talk about utilizing existing intellectual property (IP) of an organization for making their business plan. These prior art talks about manual input from a subject matter expert. In addition, none of the prior arts talk about any kind of metrics which can be used for maturing the IP led business goals.

This disclosure provides a technical solution to the above-mentioned technical problems by providing dynamic IP adoption recommendations appropriate to enterprise IP led business by way of an actionable and measurable IP adoption mechanism. The present disclosure also provides dynamic guidance and recommendation towards course correction to arrive at target state of IP led business of an enterprise following an actionable IP adoption roadmap.

To carry out IP adoption in a progressive manner in an enterprise efficiently and effectively, a holistic model is introduced through progressive maturity from a "pure-play service driven" enterprise to an "IP led adaptive" enterprise that continuously evolves in response to environmental impulses by virtue of which it can address market demand faster and with differentiated offerings.

In order to comprehensively capture the various aspects of enterprises' IP adoption, lifecycle phases of IP in an enterprise are considered as capability dimensions of the maturity model. Each of the capability dimensions are mapped to four capability sub-dimensions, which are essentially IP sustenance stages comprising of IP strategization, IP operationalization, IP institutionalization & IP industrialization. Further each sub-dimension is mapped down to multiple capability attributes for the purpose of being individually governable. A set of four distinct, progressive IP capability maturity levels are defined and applies to each of the capability attributes. These maturity levels allow the measurement of IP adoption with clear enterprise specific objectives defined and therefore contribute to determination of point-in-time IP adoption maturity state.

To effectively measure the capability attributes' maturity levels in relation to defined goals, a set of IP metrics are determined for each capability maturity level. Towards this, a set of design principles along with a framework have been provided that guides the formulation and measurement of enterprise specific IP metrics. The IP adoption maturity levels are assessed and roll up to a 5-point IP adoption index that is an indicator of IP adoption maturity of the enterprise and enables it to set its IP goals and to build an IP adoption roadmap. The IP adoption maturity model has been developed with the following key maturity tenets to enable enterprises to meet their IP adoption goal:

- Comprehensive enough to encompass & comprehend all IP lifecycle phases, IP sustenance stages & IP governance perspectives.
- Actionable by way of elaborating individual attributes corresponding to the maturity levels that enables to assess specific aspects of IP maturity as well as to provide specific recommendations.
- Measurable against every aspect of IP maturity model for every maturity level to set tangible goals, initiate a course-correction during IP adoption journey & scale.
- Consumable by all stakeholders through delineation to a level of detail towards IP adoption and not be limited to a high-level abstraction.
- Consistent in progression of maturity levels with tangible and discrete improvement between levels. Increase in maturity level should be aligned to the realization of business benefits of IP adoption.
- Agnostic of products, technologies, business domain or adoption strategies.

The present disclosure also details a maturity assessment approach based on the mentioned IP maturity model. This assessment provides comprehensive as well as strategic insight into the specific capabilities needed by an enterprise to realize its specific IP goal and help in setting the direction of its IP adoption. The assessment approach is intended to provide a 360° view of IP adoption across the IP lifecycle and enable identification of specific action items to ensure value driven realization of IP adoption and effective IP management in the enterprise. The IP adoption maturity model, approach to realization and adoption indexes formulation constitute a guideline that may be tweaked to any IP management framework that an enterprise wishes to device or adopt.

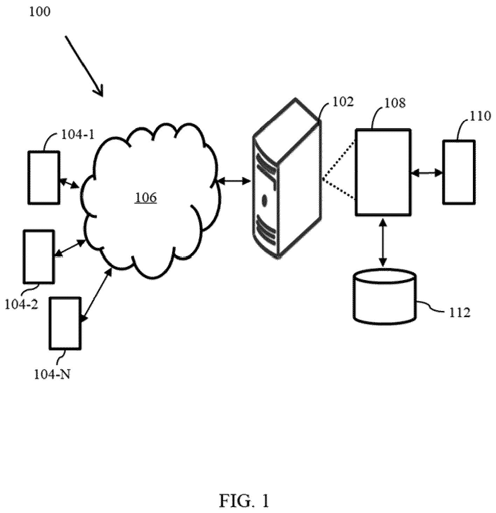

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

According to an embodiment of the disclosure, FIG. 1 illustrates a network environment 100 implementing a system 102 for providing intellectual property adoption recommendations to an enterprise, according to an embodiment of the present subject matter. The system 102 may be implemented in a variety of computing systems, such as a laptop computer, a desktop computer, a notebook, a workstation, a mainframe computer, a server, a network server, and the like. It will be understood that the system 102 may be accessed by users through one or more user devices 104-1, 104-2, 104-3 ... 104-N, collectively referred to as user devices 104. Examples of the user devices 104 include, but are not limited to, a desktop computer, a portable computer, a mobile phone, a handheld device, and a workstation. As shown in the figure, such user devices 104 are communicatively coupled to the system 102 through a network 106 for facilitating one or more users to access and use the system 102.

The network 106 may be a wireless network, wired network or a combination thereof. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network 106 may include a variety of network devices, including routers, bridges, servers, computing devices, storage devices, etc.

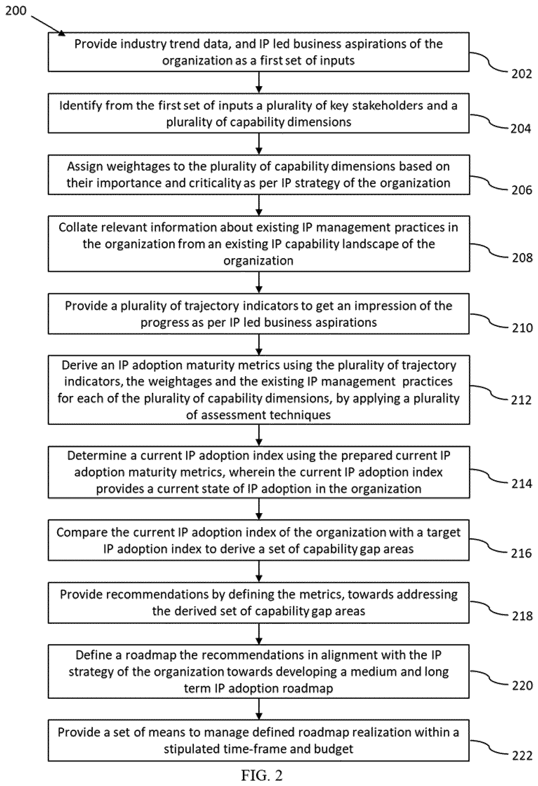

FIG. 2 illustrates an example flow chart of a method 200 providing intellectual property adoption recommendations to an enterprise, in accordance with an example embodiment of the present disclosure. The method 200 depicted in the flow chart may be executed by a system, for example, the system 100 of FIG. 1. In an example embodiment, the system 100 may be embodied in a computing device.

Operations of the flowchart, and combinations of operations in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of a system and executed by at least one processor in the system. Any such computer program instructions may be loaded onto a computer or other programmable system (for example, hardware) to produce a machine, such that the resulting computer or other programmable system embody means for implementing the operations specified in the flowchart. It will be noted herein that the operations of the method 200 are described with help of system 100. However, the operations of the method 200 can be described and/or practiced by using any other system.

At 202, the method 200 includes providing, market context data, industry trend data, and IP led business aspirations of the organization as a first set of inputs. At step 204, the method 200 includes identifying from the first set of inputs a plurality of key stakeholders and a plurality of capability dimensions. Each of the capability dimensions is mapped to four capability sub-dimensions, which are essentially IP sustenance stages comprising of IP strategization, IP operationalization, IP institutionalization and IP Industrialization. Further each sub-dimension is mapped down to multiple capability attributes for the purpose of being individually governable.

At step 206, the method 200 includes assigning weightages to the plurality of capability dimensions based on their importance and criticality as per IP strategy of the organization. The weightages are assigned at dimension and sub-dimension levels.

At step 208, the method 200 includes collating relevant information about existing IP management practices in the organization from the existing IP capability landscape of the organization.

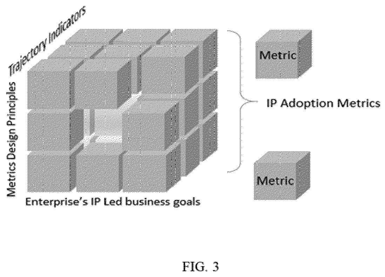

At step 210, the method 200 includes providing a plurality of trajectory indicators to get an impression of the progress as per IP led business aspirations. The plurality of trajectory indicators are configured to capture the outcome of the establishment of IP culture over a time period through IP adoption on the above design principles. FIG. 3 shows schematic representation of IP adoption maturity assessment metrics formulation. In an example, following are the plurality of trajectory indicators:

- Lagging Indicators: To provide the impression of past performance (How well we performed over a time period?)
- Real-time Indicators: To provide the impression of current performance (How are we performing now?)
- Leading Indicators: To provide the impression of capacity to adapt near-term & long-term changes in business environment due to various disruptions (How can we sustain & improve our performance in future?)

At step 212, the method 200 includes deriving, an IP adoption maturity metrics using the plurality of trajectory indicators, the weightages and the existing IP management practices for each of the plurality of capability dimensions, by applying a plurality of assessment techniques.

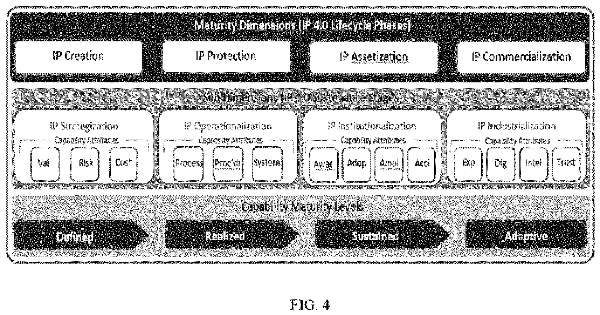

According to an embodiment of the disclosure, the system 100 is configured to generate an IP adoption maturity model as shown in the schematic representation of FIG. 4. The IP adoption maturity model takes a holistic view towards IP adoption considering all aspects of IP management in the enterprise. The IP adoption maturity model includes following components: a 5-point IP adoption index, a dimension model, a set of four maturity Levels, and a set of capability-based IP adoption metrics.

According to an embodiment of the disclosure, the IP adoption maturity model comprises the 5-point IP adoption index. The 5-point IP adoption index indicates the maturity of IP adoption of the enterprise. This index provides an objective view to an enterprise on a point-in-time state of IP adoption in tandem with its business goals, and also identify gaps to address. Based on such an evaluation, the enterprise can accordingly develop their IP roadmap.

According to an embodiment of the disclosure, the IP adoption maturity model comprises further comprises the dimension model, comprising of maturity dimensions, sub-dimensions and a set of capability-based attributes corresponding to each of a plurality of sub-dimensions. The maturity dimensions are considered as the lifecycle phases of the IP in an enterprise, i.e. IP creation, IP protection, IP assetization and IP commercialization. The maturity sub-dimensions are considered as IP sustenance stages that are specific to the enterprise, and comprises of IP strategization, IP operationalization, IP institutionalization and IP industrialization. The set of capability-based attributes are considered as the attributes of the each of the sustenance stages of enterprise IP management. Thus, value, risk, cost are for IP strategization, process & procedure, system are for IP operationalization. Awareness, adoption, amplification and acceleration are for IP institutionalization. Consumer experience, digital service, intelligent production and trust in supply chain are for IP industrialization.

According to an embodiment of the disclosure, the IP adoption maturity model also comprises the set of four distinct and progressive capability maturity levels with each level defined in terms of a set of criteria within the maturity dimensions and sub-dimensions. These maturity levels are explained in the later part of this disclosure.

According to an embodiment of the disclosure, the IP adoption maturity model further comprises a set of capability-based IP Adoption Metrics. These are defined to track the progress of IP adoption against a set of definitive IP led goals.

The evaluation of IP adoption for an enterprise is based on two axioms, namely: Axiom 1: IP adoption increases along the IP lifecycle phases from IP creation through IP protection, IP assetization and finally to IP commercialization. Axiom 2: IP adoption increases along the IP sustenance stages, from IP strategization through IP Operationalization, IP Institutionalization, and finally to IP Industrialization.

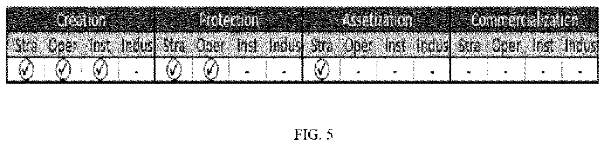

The above two axioms result in a scale that an enterprise can evaluate itself on, as its point-in-time state of IP adoption. As shown in an example of FIG. 5, an enterprise has evaluated itself as having progressed for IP creation, to institutionalization, for IP protection, to operationalization, and for IP assetization, to strategization, with no headway yet for IP commercialization. This would result in the enterprise evaluated as being in one of the 5 Adoption Indices as described below. For an enterprise to evaluate itself as having achieved any of the IP sustenance stages for any particular IP lifecycle phase, it needs to evaluate itself at the capability maturity level of defined, realized, sustained and adaptive for that stage. Only upon a satisfactory assessment of capability maturity, based on the defined IP metrics, can it be said that the particular IP sustenance stage has been achieved.

At step 214, the method 200 includes determining, a current IP adoption index using the prepared current IP adoption maturity metrics, wherein the current IP adoption index provides a current state of IP adoption in the organization. According to an embodiment of the disclosure, following approach can be used for arriving at the individual IP adoption indexes. For ascertaining the degree of IP adoption of an enterprise on a scale of indices, a detailed exercise of laying out the various combinations of maturity achievements by any enterprise over time, based on the mentioned two axioms, would reveal n-tuple states of progressively higher IP adoption that an enterprise can achieve. In the event of adopting IP 4.0 as the IP management framework, such a detailed exercise reveals n to be 69, i.e. there are 69 distinct states of IP adoption achievements for the enterprise.

According to an embodiment of the disclosure, the distinct states of IP adoption arrived at as follows: The binary numbers resulting from valid combinations of IP maturity achievements as per the axioms are considered in groups of lifecycle phases, resulting in the only valid combinations of 0000, 1000, 1100, 1110 and 1111 per Lifecycle, where the 0s and 1s represent non-achievement or achievement of strategization, operationalization, institutionalization, or industrialization, in that order. With these combinations, the axioms guide us to the total number of valid combinations (n) as:

$$n = \sum_{k=0}^{4} \sum_{j=0}^{k} \sum_{i=0}^{j} (i+1)$$

This gives 'n' as 70 to be the total valid combinations of IP 4.0 adoption possibilities in an enterprise. This number includes the combination for an enterprise that has not yet stepped into IP adoption, denoted by the unique combination 0000,0000,0000,0000. Therefore, if this unique combination is disregarded from our set of combinations, the useful IP adoption achievements for an enterprise is 70-1= 69. This also includes the combination where an enterprise has fully adopted IP across all lifecycle phases and sustenance stages, denoted by the combination 1111,1111,1111,1111.

Each of the above combinations corresponding to an IP adoption state is termed as an IP adoption index. As potentially the number of adoption indexes are too numerous to track and manage, these have been categorized into 5 blocks of indexes, each having several sub-indexes. Achievement of the operationalization of any IP lifecycle phase is considered to be a stepping stone into the higher index of IP adoption, as it is a state where tangible IP outcome begins to be realized for that phase. These IP adoption indexes are defined as below.

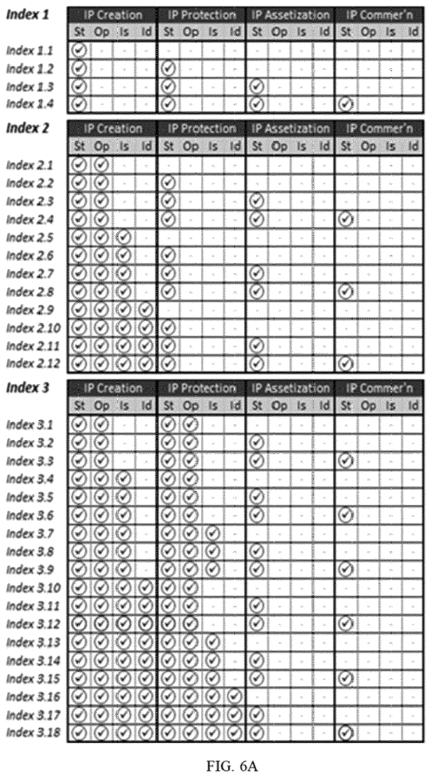

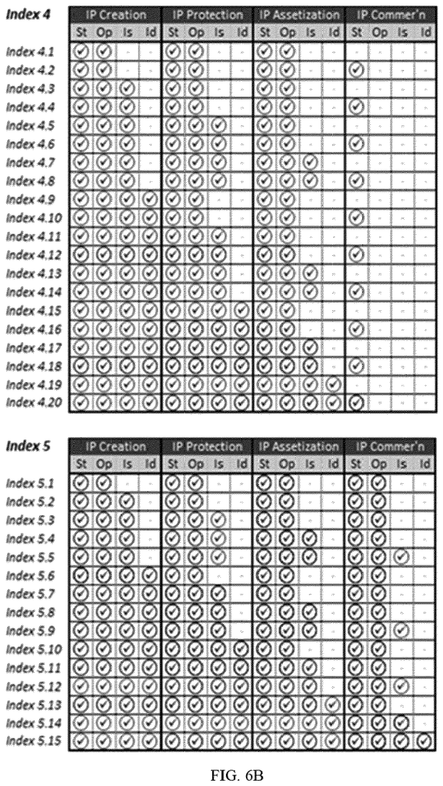

IP adoption index-I: This first level of adoption index indicates the establishment of IP management practice in the enterprise by strategization of the IP lifecycle phases at a minimum for IP creation. This comprises of Index 1.1, 1.2, 1.3 & 1.4 that are progressive strategization states for all the IP lifecycle phases as shown in FIG. 6(A) and 6(B).

IP adoption index-II: This adoption index indicates stepping into operationalization of IP creation. This comprises of Index 2.1, through 2.12 that are progressive sustenance stages leading up to a state where all sustenance stages of IP creation are achieved, and additionally strategization of IP protection, IP assetization and IP commercialization are done as shown in FIG. 6(A) and 6(B).

IP adoption index-III: This adoption index indicates stepping into operationalization of IP protection for an enterprise. This comprises of Index 3.1, through 3.18 that are progressive sustenance stages leading up to a state where all sustenance stages of IP creation as well as of IP protection are achieved, and additionally strategization of IP assetization and IP commercialization are done as shown in FIG. 6(A) and 6(B).

IP adoption index-IV: This adoption index indicates stepping into operationalization of IP assetization for an enterprise. This comprises of Index 4.1, through 4.20 that are progressive sustenance stages leading up to a state where all sustenance stages of IP creation, as well as of IP protection and of IP assetization are achieved, and additionally strategization of IP commercialization is done as shown in FIG. 6(A) and 6(B).

IP adoption index-V: Indicates stepping into operationalization of IP commercialization for an enterprise. This comprises of index 5.1, through 5.15 that are progressive sustenance stages leading up to a state where all sustenance stages of all IP lifecycle phases are achieved, which is the highest IP adoption state defined for an enterprise as shown in FIG. 6(A) and 6(B).

According to an embodiment of the disclosure, for an enterprise, it is required to identify the point-in-time maturity state of capability attributes that enables derivation of sub-dimensional maturity achievements that eventually lead up to IP adoption index determination. For this, a set of distinctly progressive maturity levels are specified as "Defined", "Realized", "Sustained", and "Adaptive". The maturity of capability attributes are stipulated against these level definitions, as per their respective implications by analyzing the scope and focus for each of its implementation aspects through a realization plan, sustained execution of such a plan, as well as seeking opportunities for future growth and change.

It may be prudent for many enterprises to judiciously strive for the appropriate maturity levels for each of the capability attributes, as the target maturity level for a capability attribute would depend upon the enterprise's goals and constraints.

According to an embodiment of the disclosure, the metrics for the assessment of IP adoption maturity helps determine the effectiveness and progress of IP adoption of an enterprise in accordance to its' IP business goals. Effective management of IP adoption pivots around the ability to identify key IP metrics and analyze to make informed decisions, course corrections and plan for the future. The set of relevant IP metrics enables to calibrate IP strategy & focus for an enterprise, on a regular basis. Metrics for the assessment of IP adoption maturity are defined per capability attribute. The following design principles to derive IP adoption metrics are considered.

- Value Contribution: Indicators to an enterprise's value-contribution by IP
- Flow Monitoring: Indicators to innovation to IP conversion, i.e. throughput and yield over a time period
- Operational Efficiency: Indicators to rate of operational transactions across IP lifecycle phases to manage and govern IP with agility
- Change Adaptation: Indicators to capability to adapt technological disruptions and consequent changes in business dynamics

The plurality of trajectory indicators along with the enterprise's business goals and metrics design principles are juxtapositioned to arrive at the IP adoption maturity assessment metrics.

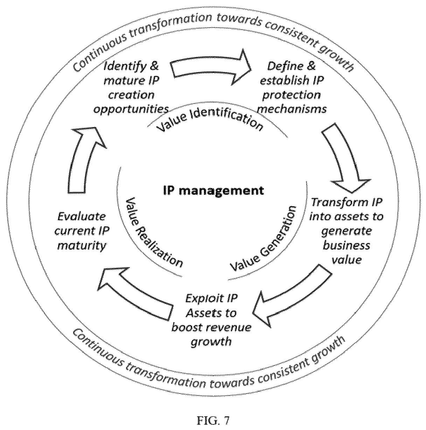

According to an embodiment of the disclosure, the IP adoption maturity model is realized in a periodic and cyclic way as shown in FIG. 7. Realization of the maturity model is enabled by an IP adoption maturity assessment approach for evaluating existing readiness and capability gaps towards formulation & course-correction of IP adoption. This in turn enables harnessing and managing IP capabilities for setting up of long-term strategic vision towards IP led business. This can be achieved by executing the following primary steps:

- Baselining of current state of IP adoption w.r.t. strategic goals as well as potential opportunities.
- Identification of specific capabilities and initiatives needed to realize target level of IP adoption.
- Setting up proper direction and focus for IP led business.

IP adoption maturity assessment approach provides a guidance to the enterprise for deriving its existing maturity levels and thereby leading to its position on the IP adoption index scale. Adoption priorities are mapped against key IP management value outcomes such as contribution to business innovation, growth & transformation enablement, differentiated asset development. IP adoption priorities are then mapped into specific IP capability requirements to derive target IP adoption maturity. For existing IP adoption maturity, the key stakeholders and information sources are identified along various capability dimensions. As a part of assessment preparation, weightages are assigned at dimension and sub-dimension levels based on their importance/criticality as per IP strategy of the enterprise. Relevant information about existing IP management environment and practices are collated and analyzed. Data assimilation & examination activities (such as stakeholder identification, workshops, interviews, surveys) are conducted to gather inputs. The assessment approach is applied from which the current IP adoption maturity for each capability dimension, sub-dimension and corresponding capability attributes are determined. Determination of the metrics position will give rise to the adoption index (Index 1 through 5) at which the organization stands at.

At step 216, the method 200 includes comparing the current IP adoption index of the organization with a target IP adoption index to derive a set of capability gap areas. Gap analysis is conducted based on the target and current enterprise IP adoption maturity to derive key capability gap areas.

At step 218, the method 200 includes providing recommendations by defining the metrics, towards addressing the derived set of capability gap areas. Specific recommendations are defined towards addressing the gap areas and prioritized in alignment with the IP strategy.

At step 220, the method 200 includes defining a roadmap, via the one or more hardware processors, using the recommendations in alignment with the IP strategy of the organization towards developing a medium and long term IP adoption roadmap. And finally at step 222, a set of means is provided to manage defined roadmap realization within a stipulated time-frame and budget.

According to an embodiment of the disclosure, the outcome from the assessment are as follows:

• As-Is and To-Be IP adoption maturity levels across assessment dimensions. This may be provided as a histogram or a radar chart to indicate the respective maturity levels in different aspects of IP adoption.
• IP adoption maturity assessment report including the weightages at the attribute levels along with the rationale for the respective score. This will provide the enterprise with a detailed analysis of the existing state of IP adoption and lay out specific areas of improvement as an input to IP strategy as well as business strategy.
• Key initiatives that are needed for addressing existing maturity gaps and transition to target maturity level, along with a roadmap for realization.

According to an embodiment of the disclosure, the system 100 can also be explained with the help of following use case scenario. The use case is explained with the help of five milestones as follows:

**Milestone 1: Current IP Adoption index determination**

In step 1, key stakeholders and information sources are identified for various maturity dimensions. In the current example, stakeholders may be CEO, COO, CTO, CDO, CIO, Business Heads, Product Heads, Research Heads of the enterprise. And the information Sources could be: Stakeholders' impression & expectation, asset profile, asset roadmap/plan (business + development), competitive landscape, trend analysis report (business + relevant technologies + relevant assets + relevant markets), competition annual reports, corporate vision (internal + competition)

In step 2, data assimilation & examination activities (such as workshops, interviews, surveys, information extraction from the above-mentioned sources) are conducted to extract relevant information for analyzing current-state IP maturity. Input for this are the information sources mentioned in step 1.
How/means: To extract stakeholders' impression & expectation: a set of questions specific to IP, IP management and IP led business contextual to the enterprise are created & responses are captured through a survey-portal. Also unstructured information sources like company portals, annual reports, analyst reports are gathered for information extraction. Algorithms are employed to extract current state information that are relevant for measuring the state of IP led business as per the maturity model.
Output: Relevant information for analyzing current-state IP maturity.

Further in step 3, weightages of IP maturity dimensions, sub-dimensions, and capability attributes are identified. Input for this step are IP led business priorities as per the inputs from the key stakeholders.
How/means: Weightages are assigned, corresponding to each maturity dimension, sub-dimension & capability attributes, as per current IP led business priorities and ratified by the key stakeholders.
Output: Weightages for maturity dimensions, sub-dimensions & capability attributes corresponding to each IP led business priorities.

Further in step 4, capability maturity levels (DRSA) are evaluated for corresponding maturity sub-dimension and in turn maturity dimension. The inputs for this step are current-state IP led business information, weightages as per step 3.
How/means: Current-state IP adoption information are mapped with the checklist of DRSA levels using rules for fitment of appropriate information with the checklist, through a rule engine. For every maturity dimension that is relevant for the enterprise, from IP Creation to IP Protection to IP Assetization to IP Commercialization, each relevant sub-dimension from IP Strategization to IP Operationalization to IP Institutionalization to IP Industrialization is examined for its accomplishment as per the rules.
Output: Current-state evaluation of IP adoption maturity level as per DRSA level definitions.

In step 5, current-state IP metrics identification/determination is done corresponding to each relevant capability attribute. The inputs for this step are relevant IP capability attributes and corresponding weightages, current IP led business options & state, current-state IP adoption maturity level as per DRSA level definitions and checkpoints.

How/Means: Enterprise specific IP capability metrics are identified and mapped with the DRSA levels mentioned above. Metrics values are determined based on the weightages and current IP led business options & state, as well-defined rules that are encoded by statistical analysis based rule engine.

Output: A set of relevant IP metrics and its current-state value.

Finally at step 6, current-state IP adoption index is determined. Inputs to this step are current relevant IP metrics across all maturity dimensions, sub-dimensions and capability attributes and current-state IP adoption maturity measures.

How/Means: These set of IP maturity accomplishments are matched with the Adoption index pattern. Upon satisfactory assessment of capability maturity, based on the defined IP metrics, particular IP sustenance stages for all relevant IP Lifecycle phases are derived and the current IP adoption pattern is determined. This current state IP Adoption pattern is matched with the IP adoption index pattern resulting in the determination of point-in-time IP adoption index. This pattern matching is accomplished through an algorithmic pattern matching engine.

Output: Current-state IP adoption index

**Milestone 2: Target IP Adoption Index finalization**

Initially in step 1, data assimilation & examination is done to determine target-state IP adoption capability maturity. Inputs to this step are business parameters relevant to IP led business that enterprise wants to target in a given time for determining target-state IP adoption capability maturity in alignment with target-state IP led business vision & strategy. Examples are "no. of IP-led business opportunities"; "no. of IP-led offerings"; "enterprise innovation index"; "revenue from IP-led business"; "Idea-to-IP/IPR conversion ratio"; "IP portfolio maturity index".

Output: Target IP adoption maturity capability attributes

In step 2, IP adoption metrics are determined corresponding to each relevant capability attribute in accordance with target-state. the inputs are target IP adoption maturity capability attributes

How/Means: IP adoption metrics are determined analyzing the trajectory indicators, metrics design principles, in conjunction with the Target IP adoption maturity capability attributes in alignment with IP led business goals:

- Trajectory indicators: Lagging indicators, real-time indicators, Leading indicators from "Target IP adoption maturity capability attributes"
- Metrics design principles: Applied to determine the type of metrics as appropriate for an enterprise-context
- IP led business goals: parameters corresponding to revenue target; brand positioning indicators; market differentiation indicators

Transform the desired business parameters to IP parameters by the way of a implementing a multivariate analysis of covariance, considering the trajectory indicators, input capability attributes, and existing IP adoption roadmap. These are the target IP Adoption metrics.

Output: IP adoption metrics and target measures

In step 3, target-state IP adoption index is determined. The inputs are IP adoption metrics and target measures grouped by maturity dimensions, sub-dimensions and capability attributes.

How/Means: Target IP maturity measures are matched with the adoption index pattern. Based on the IP maturity metrics target measures, particular IP sustenance stages for all relevant IP lifecycle phases are derived and the IP adoption pattern is determined. This target state IP Adoption pattern is matched with the IP adoption index pattern resulting in the determination of target IP adoption index. This pattern matching is accomplished through an algorithmic pattern matching engine.

Output: Target IP capability maturity index

**Milestone 3: Gap Analysis**

In step 1, IP capability gaps are determined between target-state & current-state corresponding to all relevant capability attributes for the enterprise. The inputs are current-state IP adoption index, current-state IP adoption metrics and corresponding IP capability attributes, target-state IP adoption index, target-state IP adoption metrics and corresponding IP capability attributes.

How/Means: IP capability gaps between target-state & current-state are worked out from IP metrics. This is achieved by multivariate analysis of metrics assessment along with any tolerances defined in the IP strategy. For the current state of IP Adoption, comparison is done with existing IP adoption roadmap to assess gap with current state target. Based on the gap, tolerance and adjustment to future target is made to tune the future target state.

Output: IP capability gaps to achieve target-state IP adoption index.

**Milestone 4: Roadmap development to arrive at Target IP Adoption state**

In step 1, actions to overcome each of the capability gap are identified. The inputs to this step are IP capability gaps to achieve target-state IP adoption index, current-state IP capabilities; steps to achieve IP capabilities corresponding to gapareas.

How/Means: Root-cause analysis (RCA) for each of the gap; identification of action items to address each of the gap as per root-cause analysis. RCA is performed by indexed and ranked root causes that are attributed to identified gaps through statistical methods.

Output: Identification of action items to overcome each of the IP capability gap areas.

In step 2, action items are prioritized based on IP led business priorities. The inputs to this step are IP led business priorities; list of action item/s to overcome each of the IP capability gap.

How/Means: Mapping of IP capability gaps & corresponding action items with IP led business priorities. This is carried out by comparing target IP metrices with gaps through a mapping algorithm.

Output: Prioritized of list of action items.

In step 3, estimation & qualification of resources (people, cost, and infrastructure) is done in accordance with the action-prioritization list. The inputs are prioritized of list of action items.

How/Means: Qualification of resource requirement as per action item list; Estimation of resource requirement to overcome gaps as per stipulated timeline. This is carried out with a resource estimation engine.

Output: Requisite resource-list along with corresponding estimation.

In step 4, a roadmap is developed. The inputs are IP led business priorities along with stipulated timeline; prioritized list of action items; requisite resource-list along with corresponding estimation.

How/Means: Mapping amongst "IP led business priorities", "Prioritized list of action items"; "Requisite resource-list"; "stipulated timeline" & milestones using mapping algorithm.

Output: Arrive at the target state

**Milestone 5: Means to manage Roadmap realization within stipulated time-frame & budget (cost & effort) [iterative process till roadmap realization]**

In step 1, periodic monitoring of IP adoption milestone accomplishments is done as per roadmap. The inputs are roadmap to arrive at the target state.

How/Means: Dashboard to reflect point-in-time progress-state of IP adoption milestones along with all the relevant parameters.

Output: IP adoption dashboard for the enterprise

In step 2, milestone-gaps are identified followed by impact analysis. The inputs are IP adoption dashboard with all the relevant parameters.

How/Means: Identification of milestone-gaps; root-cause analysis for each gap; impact analysis on budget & roadmap (tactical) and IP led business plan (strategic).

Output: Impact analysis for milestone-gaps; automated sensitization to stakeholders as per the degree of the impacts.

In the step 3, recommendations are made for course correction to address the gaps. The inputs to this step are milestone-gaps; root-cause analysis for each of the gaps; impact analysis corresponding to milestone-gaps.

How/Means: Transforming milestone gaps into action items and sensitizing stakeholders using recommendation engine. Recommendation engine used for determining course correction from a combination of past-vs-present, and present-vs-future.

Output: Periodic recommendation for each of the milestone gaps till the target state is achieved.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of efficient and effective management of IP-led business of the organization. The embodiment thus provides a method and system for providing intellectual property (IP) adoption recommendations to an enterprise.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200) for realizing intellectual property (IP) in an organization, the method comprising:

providing, via one or more hardware processors, market context data, industry trend data, and IP led business aspirations of the organization as a first set of inputs (202);
identifying, via the one or more hardware processors, from the first set of inputs a plurality of key stakeholders and a plurality of capability dimensions (204);
assigning, via the one or more hardware processors, weightages to the plurality of capability dimensions based on their importance and criticality as per an IP strategy of the organization (206);
collating, via the one or more hardware processors, relevant information about existing IP management practices in the organization from an existing IP capability landscape of the organization (208);
providing, via the one or more hardware processors, a plurality of trajectory indicators to get an impression of the progress as per IP led business aspirations (210);
deriving, via the one or more hardware processors, an IP adoption maturity metrics using the plurality of trajectory indicators, the weightages and the existing IP management practices for each of the plurality of capability dimensions, by applying a plurality of assessment techniques (212);
determining, via the one or more hardware processors, a current IP adoption index using the prepared current IP adoption maturity metrics, wherein the current IP adoption index provides a current state of IP adoption in the organization (214);
comparing, via the one or more hardware processors, the current IP adoption index of the organization with a target IP adoption index to derive a set of capability gap areas (216);
providing, via the one or more hardware processors, recommendations by defining the metrics, towards addressing the derived set of capability gap areas (218);
defining a roadmap, via the one or more hardware processors, using the recommendations in alignment with the IP strategy of the organization towards developing a medium and long term IP adoption roadmap (220); and
providing, via the one or more hardware processors, a set of means to manage defined roadmap realization within a stipulated time-frame and budget (222).

2. The method according to claim 1 further comprising accommodating organization's specific capabilities and capacities to define the IP adoption roadmap.

3. The method according to claim 1 wherein, the set of capability gap areas is derived using multivariate analysis of metrics assessment along with a set of tolerances defined in the first set of inputs and wherein milestones for roadmap, corresponding assessments, course corrections, and recommendations for the future are based on respective metrics analysis and measurements of various adoption states.

4. The method according to claim 1 further comprising capturing and analyzing the current state data though inputs from various sources comprising: individual inputs, ecosystem inputs, and company portal inputs.

5. The method according to claim 1, further comprising arriving at a plurality of distinct states of IP adoption as follows:

considering binary numbers resulting from valid combinations of IP maturity achievements as per the axioms in groups of a lifecycle phases; resulting in the only valid combinations of 0000, 1000, 1100, 1110 and 1111 per lifecycle, where the 0s and 1s represent non-achievement or achievement of strategization, operationalization, institutionalization, or industrialization, respectively;
getting the total number of valid combinations (n) as:

$$n = \sum_{k=0}^{4} \sum_{j=0}^{k} \sum_{i=0}^{j} (i+1),$$

disregarding the combination for an enterprise that has not yet stepped into IP adoption from the total number of valid combinations, to get the useful IP adoption achievements for an enterprise.

6. The method according to claim 1, wherein the plurality of trajectory indicators comprises one or more of:

a set of lagging indicators configured to provide the impression of past performance of the organization;
a set of real-time indicators configured to provide the impression of current performance of the organization; and
a set of leading Indicators configured to provide the impression of capacity to adapt near-term & long-term changes in the organization.

7. The method according to claim 1 wherein the current IP adoption index comprises:

a first level adoption index indicates the establishment of IP management practice in the organization by strategization of the IP lifecycle phases at a minimum for IP creation;
a second level adoption index indicates stepping into operationalization of IP creation and includes all stages of maturity of the enterprise from this up to institutionalization and industrialization of IP creation, and also strategization of IP protection, IP assetization, and IP commercialization;

a third level adoption index indicates stepping into operationalization of IP protection for the organization and includes all stages of maturity from this up to institutionalization and industrialization of IP creation and IP protection, as well as strategization of IP assetization, and IP commercialization;
a fourth level adoption index indicates stepping into operationalization of IP assetization for the organization and includes all stages of maturity from this up to institutionalization and industrialization of IP creation, IP protection and IP assetization, and also strategization of IP commercialization; and
a fifth level adoption index indicates stepping into operationalization of IP commercialization for an enterprise and includes all stages of maturity from this up to institutionalization and industrialization of IP creation, IP protection, IP assetization, and IP commercialization.

8. The method according to claim 1 further comprising evaluating severity of IP led business needs using an IP strategy specific questionnaire.

9. A system for realizing intellectual property (IP) in an organization, the system comprises:

an input/output interface (104) for providing market context data, industry trend data, and IP led business aspirations of the organization as a first set of inputs;
one or more hardware processors (108);
a memory (110) in communication with the one or more hardware processors, wherein the one or more first hardware processors are configured to execute programmed instructions stored in the one or more first memories, to:

identify from the first set of inputs a plurality of key stakeholders and a plurality of capability dimensions;
assign weightages to the plurality of capability dimensions based on their importance and criticality as per an IP strategy of the organization;
collate relevant information about existing IP management practices in the organization from an existing IP capability landscape of the organization;
provide a plurality of trajectory indicators to get an impression of the progress as per IP led business aspirations;
derive an IP adoption maturity metrics using the plurality of trajectory indicators, the weightages and the existing IP management practices for each of the plurality of capability dimensions, by applying a plurality of assessment techniques;

determine a current IP adoption index using the prepared current IP adoption maturity metrics, wherein the current IP adoption index provides a current state of IP adoption in the organization;

compare the current IP adoption index of the organization with a target IP adoption index to derive a set of capability gap areas;

provide recommendations by defining the metrics, towards addressing the derived set of capability gap areas;

define a roadmap using the recommendations in alignment with the IP strategy of the organization towards developing a medium and long term IP adoption roadmap;

provide a set of means to manage defined roadmap realization within a stipulated time-frame and budget.

10. The system according to claim 9 wherein, the set of capability gap areas is derived using multivariate analysis of metrics assessment along with a set of tolerances defined in the first set of inputs and milestones for roadmap, corresponding assessments, course corrections, and recommendations for the future are based on respective metrics analysis and measurements of various adoption states.

11. The system according to claim 9, wherein the plurality of trajectory indicators comprises one or more of:

a set of lagging indicators configured to provide the impression of past performance of the organization;

a set of real-time indicators configured to provide the impression of current performance of the organization; and

a set of leading Indicators configured to provide the impression of capacity to adapt near-term & long-term changes in the organization.

12. The system according to claim 9, further configured to arriving at a plurality of distinct states of IP adoption as follows:

considering binary numbers resulting from valid combinations of IP maturity achievements as per the axioms in groups of a lifecycle phases; resulting in the only valid combinations of 0000, 1000, 1100, 1110 and 1111 per lifecycle, where the 0s and 1s represent non-achievement or achievement of strategization, operationalization, institutionalization, or industrialization, respectively;

getting the total number of valid combinations (n) as:

$$n = \sum_{k=0}^{4} \sum_{j=0}^{k} \sum_{i=0}^{j} (i+1),$$

disregarding the combination for an enterprise that has not yet stepped into IP adoption from the total number of valid combinations, to get the useful IP adoption achievements for an enterprise.

13. The system according to claim 9 wherein the current IP adoption index comprises:

a first level adoption index indicates the establishment of IP management practice in the organization by strategization of the IP lifecycle phases at a minimum for IP creation;

a second level adoption index indicates stepping into operationalization of IP creation and includes all stages of maturity of the enterprise from this up to institutionalization and industrialization of IP creation, and also strategization of IP protection, IP assetization, and IP commercialization;

a third level adoption index indicates stepping into operationalization of IP protection for the organization and includes all stages of maturity from this up to institutionalization and industrialization of IP creation and IP protection, as well as strategization of IP assetization, and IP commercialization;

a fourth level adoption index indicates stepping into operationalization of IP assetization for the organization and includes all stages of maturity from this up to institutionalization and industrialization of IP creation, IP protection and IP assetization, and also strategization of IP commercialization; and

a fifth level adoption index indicates stepping into operationalization of IP commercialization for an enterprise and includes all stages of maturity from this up to institutionalization and industrialization of IP creation, IP protection, IP assetization, and IP commercialization.

14. The system according to claim 9 further configured to evaluate severity of IP led business needs using an IP strategy specific questionnaire.

15. One or more non-transitory machine readable information storage mediums comprising one or more instructions which when executed by one or more hardware processors cause managing a plurality of events, the instructions cause:

providing market context data, industry trend data, and IP led business aspirations of the organization as a first set of inputs;

identifying from the first set of inputs a plurality of key stakeholders and a plurality of capability dimensions;

assigning weightages to the plurality of capability dimensions based on their importance and criticality as per an IP strategy of the organization;

collating relevant information about existing IP management practices in the organization from an existing IP capability landscape of the organization;

providing a plurality of trajectory indicators to get an impression of the progress as per IP led business aspirations;

deriving an IP adoption maturity metrics using the plurality of trajectory indicators, the weightages and the existing IP management practices for each of the plurality of capability dimensions, by applying a plurality of assessment techniques;

determining a current IP adoption index using the prepared current IP adoption maturity metrics, wherein the current IP adoption index provides a current state of IP adoption in the organization;

comparing the current IP adoption index of the organization with a target IP adoption index to derive a set of capability gap areas;

providing recommendations by defining the metrics, towards addressing the derived set of capability gap areas;

defining a roadmap using the recommendations in alignment with the IP strategy of the organization towards developing a medium- and long-term IP adoption roadmap; and

providing a set of means to manage defined roadmap realization within a stipulated timeframe and budget.

**Amended claims in accordance with Rule 137(2) EPC.**

1.  A processor implemented method (200) for realizing intellectual property (IP) in an organization, performed by a computing device, the method comprising:

    providing, via one or more hardware processors, market context data, industry trend data, and IP led business aspirations of the organization as a first set of inputs (202), wherein a portal enables assimilation and examination activities to extract relevant information for analyzing current-state IP maturity along with unstructured information that are gathered for information extraction, wherein an algorithm is employed to extract current state information that are relevant for measuring the state of IP led business;

    identifying, via the one or more hardware processors, from the first set of inputs a plurality of key stakeholders and a plurality of capability dimensions (204);

    assigning, via the one or more hardware processors, weightages to the plurality of capability dimensions based on their importance and criticality as per an IP strategy of the organization (206), wherein the weightages are assigned at dimension and sub-dimension levels based on their importance/criticality as per IP strategy of the enterprise;

    collating, via the one or more hardware processors, relevant information about existing IP management practices in the organization from an existing IP capability landscape of the organization (208), wherein for every maturity dimension that is relevant for the enterprise, from IP Creation to IP Protection to IP Assetization to IP Commercialization, each relevant sub-dimension from IP Strategization to IP Operationalization to IP Institutionalization to IP Industrialization is examined for its accomplishment as per the rules set in a rule engine;

    providing, via the one or more hardware processors, a plurality of trajectory indicators to get an impression of the progress as per IP led business aspirations (210);

    deriving, via the one or more hardware processors, IP adoption maturity metrics using the plurality of trajectory indicators, the weightages and the existing IP management practices for each of the plurality of capability dimensions, by applying a plurality of assessment techniques (212);

    determining, via the one or more hardware processors, a current IP adoption index using the prepared current IP adoption maturity metrics, wherein the current IP adoption index provides a current state of IP adoption in the organization (214), wherein the current state IP adoption information are mapped with a set of capability maturity levels using rules for fitment of appropriate information through the rule engine and further metric values are determined based on the weightages and current IP led business with defined rules encoded by statistical analysis based rule engine;

    comparing, via the one or more hardware processors, the current IP adoption index of the organization with a target IP adoption index to derive a set of capability gap areas (216), wherein data assimilation and examination are performed to determine target-state IP adoption capability maturity with inputs as business parameters that is relevant to IP led business that enterprise wants to target in a given time;

    providing, via the one or more hardware processors, recommendations by defining the metrics with a recommendation engine that determines course correction from a combination of past-vs-present and present-vs-future, towards addressing the derived set of capability gap areas (218);

defining a roadmap, via the one or more hardware processors, using the recommendations in alignment with the IP strategy of the organization towards developing a medium and long term IP adoption roadmap (220), wherein the business parameters are transformed to IP parameters by the way of implementing a multivariate analysis of covariance, considering the trajectory indicators, input capability attributes, and existing IP adoption roadmap; and

providing, via the one or more hardware processors, a set of means to manage defined roadmap realization within a stipulated time-frame and budget (222).

2. The method according to claim 1 further comprising accommodating organization's specific capabilities and capacities to define the IP adoption roadmap.

3. The method according to claim 1 wherein, the set of capability gap areas is derived using multivariate analysis of metrics assessment along with a set of tolerances defined in the first set of inputs and wherein milestones for roadmap, corresponding assessments, course corrections, and recommendations for the future are based on respective metrics analysis and measurements of various adoption states.

4. The method according to claim 1 further comprising capturing and analyzing the current state data though inputs from various sources comprising: individual inputs, ecosystem inputs, and company portal inputs.

5. The method according to claim 1, further comprising arriving at a plurality of distinct states of IP adoption as follows:

considering binary numbers resulting from valid combinations of IP maturity achievements as per the axioms in groups of a lifecycle phases; resulting in the only valid combinations of 0000, 1000, 1100, 1110 and 1111 per lifecycle, where the os and is represent non-achievement or achievement of strategization, operationalization, institutionalization, or industrialization, respectively;

getting the total number of valid combinations (n) as:

$$n = \sum_{k=0}^{4} \sum_{j=0}^{k} \sum_{i=0}^{j}(i + 1),$$

disregarding the combination for an enterprise that has not yet stepped into IP adoption from the total number of valid combinations, to get the useful IP adoption achievements for an enterprise.

6. The method according to claim 1, wherein the plurality of trajectory indicators comprises one or more of:

a set of lagging indicators configured to provide the impression of past performance of the organization;

a set of real-time indicators configured to provide the impression of current performance of the organization; and

a set of leading Indicators configured to provide the impression of capacity to adapt near-term & long-term changes in the organization.

7. The method according to claim 1 wherein the current IP adoption index comprises:

a first level adoption index indicates the establishment of IP management practice in the organization by strategization of the IP lifecycle phases at a minimum for IP creation;

a second level adoption index indicates stepping into operationalization of IP creation and includes all stages of maturity of the enterprise from this up to institutionalization and industrialization of IP creation, and also strategization of IP protection, IP assetization, and IP commercialization;

a third level adoption index indicates stepping into operationalization of IP protection for the organization and includes all stages of maturity from this up to institutionalization and industrialization of IP creation and IP protection, as well as strategization of IP assetization, and IP commercialization;

a fourth level adoption index indicates stepping into operationalization of IP assetization for the organization and includes all stages of maturity from this up to institutionalization and industrialization of IP creation, IP protection and IP assetization, and also strategization of IP commercialization; and

a fifth level adoption index indicates stepping into operationalization of IP commercialization for an enterprise and includes all stages of maturity from this up to institutionalization and industrialization of IP creation, IP protection, IP assetization, and IP commercialization.

8. The method according to claim 1 further comprising evaluating severity of IP led business needs using an IP strategy specific questionnaire.

9. A system (100) for realizing intellectual property (IP) in an organization, the system (100) embodied in a computing device comprises:

an input/output interface (104) for providing market context data, industry trend data, and IP led business aspirations of the organization as a first set of inputs, wherein a portal enables assimilation and examination activities to extract relevant information for analyzing current-state IP maturity along with unstructured information that are gathered for information extraction, wherein an algorithm is employed to extract current state information that are relevant for measuring the state of IP led business;
one or more hardware processors (108);
a memory (110) in communication with the one or more hardware processors, wherein the one or more first hardware processors are configured to execute programmed instructions stored in the one or more first memories, to:

identify from the first set of inputs a plurality of key stakeholders and a plurality of capability dimensions;
assign weightages to the plurality of capability dimensions based on their importance and criticality as per an IP strategy of the organization, wherein the weightages are assigned at dimension and sub-dimension levels based on their importance/criticality as per IP strategy of the enterprise;
collate relevant information about existing IP management practices in the organization from an existing IP capability landscape of the organization, wherein for every maturity dimension that is relevant for the enterprise, from IP Creation to IP Protection to IP Assetization to IP Commercialization, each relevant sub-dimension from IP Strategization to IP Operationalization to IP Institutionalization to IP Industrialization is examined for its accomplishment as per the rules set in a rule engine;
provide a plurality of trajectory indicators to get an impression of the progress as per IP led business aspirations;
derive IP adoption maturity metrics using the plurality of trajectory indicators, the weightages and the existing IP management practices for each of the plurality of capability dimensions, by applying a plurality of assessment techniques;
determine a current IP adoption index using the prepared current IP adoption maturity metrics, wherein the current IP adoption index provides a current state of IP adoption in the organization, wherein the current state IP adoption information are mapped with a set of capability maturity levels using rules for fitment of appropriate information through the rule engine and further metric values are determined based on the weightages and current IP led business with defined rules encoded by statistical analysis based rule engine;
compare the current IP adoption index of the organization with a target IP adoption index to derive a set of capability gap areas, wherein data assimilation and examination are performed to determine target-state IP adoption capability maturity with inputs as business parameters that is relevant to IP led business that enterprise wants to target in a given time;
provide recommendations by defining the metrics, towards addressing the derived set of capability gap areas with a recommendation engine that determines course correction from a combination of past-vs-present and present-vs-future;
define a roadmap using the recommendations in alignment with the IP strategy of the organization towards developing a medium and long term IP adoption roadmap, wherein the business parameters are transformed to IP parameters by the way of implementing a multivariate analysis of covariance, considering the trajectory indicators, input capability attributes, and existing IP adoption roadmap;
provide a set of means to manage defined roadmap realization within a stipulated time-frame and budget.

10. The system according to claim 9 wherein, the set of capability gap areas is derived using multivariate analysis of metrics assessment along with a set of tolerances defined in the first set of inputs and milestones for roadmap, corresponding assessments, course corrections, and recommendations for the future are based on respective metrics analysis and measurements of various adoption states.

11. The system according to claim 9, wherein the plurality of trajectory indicators comprises one or more of:

a set of lagging indicators configured to provide the impression of past performance of the organization;
a set of real-time indicators configured to provide the impression of current performance of the organization; and
a set of leading Indicators configured to provide the impression of capacity to adapt near-term & long-term changes in the organization.

12. The system according to claim 9, further configured to arriving at a plurality of distinct states of IP adoption as follows:

considering binary numbers resulting from valid combinations of IP maturity achievements as per the axioms in groups of a lifecycle phases; resulting in the only valid combinations of 0000, 1000, 1100, 1110 and 1111 per lifecycle, where the os and is represent non-achievement or achievement of strategization, operationalization, institutionalization, or industrialization, respectively;
getting the total number of valid combinations (n) as:

$$n = \sum_{k=0}^{4} \sum_{j=0}^{k} \sum_{i=0}^{j} (i + 1),$$

disregarding the combination for an enterprise that has not yet stepped into IP adoption from the total number of valid combinations, to get the useful IP adoption achievements for an enterprise.

13. The system according to claim 9 wherein the current IP adoption index comprises:

a first level adoption index indicates the establishment of IP management practice in the organization by strategization of the IP lifecycle phases at a minimum for IP creation;
a second level adoption index indicates stepping into operationalization of IP creation and includes all stages of maturity of the enterprise from this up to institutionalization and industrialization of IP creation, and also strategization of IP protection, IP assetization, and IP commercialization;
a third level adoption index indicates stepping into operationalization of IP protection for the organization and includes all stages of maturity from this up to institutionalization and industrialization of IP creation and IP protection, as well as strategization of IP assetization, and IP commercialization;
a fourth level adoption index indicates stepping into operationalization of IP assetization for the organization and includes all stages of maturity from this up to institutionalization and industrialization of IP creation, IP protection and IP assetization, and also strategization of IP commercialization; and
a fifth level adoption index indicates stepping into operationalization of IP commercialization for an enterprise and includes all stages of maturity from this up to institutionalization and industrialization of IP creation, IP protection, IP assetization, and IP commercialization.

14. The system according to claim 9 further configured to evaluate severity of IP led business needs using an IP strategy specific questionnaire.

15. One or more non-transitory machine readable information storage mediums comprising one or more instructions which when executed by one or more hardware processors cause for realizing intellectual property (IP) in an organization, performed by a computing device, the instructions cause:

providing market context data, industry trend data, and IP led business aspirations of the organization as a first set of inputs, wherein a portal enables assimilation and examination activities to extract relevant information for analyzing current-state IP maturity along with unstructured information that are gathered for information extraction, wherein an algorithm is employed to extract current state information that are relevant for measuring the state of IP led business;
identifying from the first set of inputs a plurality of key stakeholders and a plurality of capability dimensions;
assigning weightages to the plurality of capability dimensions based on their importance and criticality as per an IP strategy of the organization, wherein the weightages are assigned at dimension and sub-dimension levels based on their importance/criticality as per IP strategy of the enterprise;
collating relevant information about existing IP management practices in the organization from an existing IP capability landscape of the organization, wherein for every maturity dimension that is relevant for the enterprise, from IP Creation to IP Protection to IP Assetization to IP Commercialization, each relevant sub-dimension from IP Strategization to IP Operationalization to IP Institutionalization to IP Industrialization is examined for its accomplishment as per the rules set in a rule engine;
providing a plurality of trajectory indicators to get an impression of the progress as per IP led business aspirations;
deriving IP adoption maturity metrics using the plurality of trajectory indicators, the weightages and the existing IP management practices for each of the plurality of capability dimensions, by applying a plurality of assessment techniques;
determining a current IP adoption index using the prepared current IP adoption maturity metrics, wherein the current IP adoption index provides a current state of IP adoption in the organization, wherein the current state IP adoption information are mapped with a set of capability maturity levels using rules for fitment of appropriate information through the rule engine and further metric values are determined based on the weightages and current IP led business with defined rules encoded by statistical analysis based rule engine;

comparing the current IP adoption index of the organization with a target IP adoption index to derive a set of capability gap areas, wherein data assimilation and examination are performed to determine target-state IP adoption capability maturity with inputs as business parameters that is relevant to IP led business that enterprise wants to target in a given time;

providing recommendations by defining the metrics, towards addressing the derived set of capability gap areas with a recommendation engine that determines course correction from a combination of past-vs-present and present-vs-future;

defining a roadmap using the recommendations in alignment with the IP strategy of the organization towards developing a medium- and long-term IP adoption roadmap, wherein the business parameters are transformed to IP parameters by the way of implementing a multivariate analysis of covariance, considering the trajectory indicators, input capability attributes, and existing IP adoption roadmap; and

providing a set of means to manage defined roadmap realization within a stipulated timeframe and budget.

100

104-1

104-2

104-N

106

102

108

110

112

FIG. 1

200

Provide industry trend data, and IP led business aspirations of the organization as a first set of inputs — 202

Identify from the first set of inputs a plurality of key stakeholders and a plurality of capability dimensions — 204

Assign weightages to the plurality of capability dimensions based on their importance and criticality as per IP strategy of the organization — 206

Collate relevant information about existing IP management practices in the organization from an existing IP capability landscape of the organization — 208

Provide a plurality of trajectory indicators to get an impression of the progress as per IP led business aspirations — 210

Derive an IP adoption maturity metrics using the plurality of trajectory indicators, the weightages and the existing IP management practices for each of the plurality of capability dimensions, by applying a plurality of assessment techniques — 212

Determine a current IP adoption index using the prepared current IP adoption maturity metrics, wherein the current IP adoption index provides a current state of IP adoption in the organization — 214

Compare the current IP adoption index of the organization with a target IP adoption index to derive a set of capability gap areas — 216

Provide recommendations by defining the metrics, towards addressing the derived set of capability gap areas — 218

Define a roadmap the recommendations in alignment with the IP strategy of the organization towards developing a medium and long term IP adoption roadmap — 220

Provide a set of means to manage defined roadmap realization within a stipulated time-frame and budget — 222

FIG. 2

FIG. 3

FIG. 4

| Creation | | | | Protection | | | | Assetization | | | | Commercialization | | | |
|---|---|---|---|---|---|---|---|---|---|---|---|---|---|---|---|
| Stra | Oper | Inst | Indus | Stra | Oper | Inst | Indus | Stra | Oper | Inst | Indus | Stra | Oper | Inst | Indus |
| ✓ | ✓ | ✓ | - | ✓ | ✓ | - | - | ✓ | - | - | - | - | - | - | - |

FIG. 5

FIG. 6A

FIG. 6B

FIG. 7

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/166460 A1 (MOHANTY SANTOSH KUMAR [IN] ET AL) 27 June 2013 (2013-06-27) <br> * abstract * <br> * paragraphs [0016] - [0025], [0027] - [0056] * <br> ----- | 1-15 | INV. <br> G06Q10/04 <br> G06Q10/06 <br> G06Q10/10 <br> G06Q50/18 |

TECHNICAL FIELDS
SEARCHED      (IPC)

G06Q

The present search report has been drawn up for all claims

| Place of search | Date of completion of the search | Examiner |
|---|---|---|
| Munich | 2 March 2022 | Moltenbrey, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                              
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 6757

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2022

| Patent document cited in search report | Publication date | Patent family member(s) | Publication date |
|---|---|---|---|
| US 2013166460 A1 | 27-06-2013 | NONE | |

For more details about this annex : see Official Journal of the European Patent Office, No. 12/82

**EP 4 075 352 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202121017730